# EUROPEAN PATENT APPLICATION

(11) **EP 1 420 278 A2**
(43) Date of publication of application: **19.05.2004**
(21) Application number: 03025609.3
(22) Date of filing: 06.11.2003
(51) Int. Cl.: G02B 6/44

(54) **Jacket materials and fiber optic cable design for duct application**

(30) Priority: 15.11.2002 US 426395 P; 02.05.2003 US 428128
(71) Applicant: ALCATEL, 75008 Paris (FR)
(72) Inventor: Dallas, George, Hickory, NC 28601 (US); Rossi, Michael T., Maiden, NC 28650 (US); Storaasli, Olaf, Hickory, NC 28601 (US); Nechitailo, Nicholas, King George, VA 22485 (US)
(74) Representative: Schäfer, Wolfgang, Dipl.-Ing.

(57) **Abstract**

A fiber optic cable utilizing fibers mixed within the jacket material. This design improves the properties of the jacket (2) by decreasing the jacket's shrinkage after aging; decreasing the jacket's coefficient of thermal expansion; and increasing the jacket's surface roughness.

## Description

### Technical Field

This invention generally relates to fiber optic cables. More specifically, the proposed cable design utilizes small fibers mixed within the jacket material of the fiber.optic cables. This design improves the properties of the jacket by decreasing the jacket's shrinkage after aging; decreasing the jacket's coefficient of thermal expansion; and increasing the jacket's surface roughness.

### Background

Conventionally, fiber optic cables were constructed by providing a simple homogeneous thermoplastic jacket with a smooth outer surface around an optical fiber. However, this construction suffers from several disadvantages.

For example, after a fiber optic cable is manufactured, the jacket may shrink as it ages due to crystallization of the plastic material. This shrinkage after aging may attenuate the underlying optical cable,and adversely affect performance.

Further, in high or low temperature applications, the differential between the expansion/contraction rates of the optical cable and the jacket materials (defined by the coefficient of thermal expansion of the material) may also affect the performance of the cable due to attenuation or other stress effects.

Traditional methods of controlling such expansion/contraction include adding reinforcing members (such as solid glass reinforcing members or steel strength members) in the outer jacket. However, the addition of such strength members greatly increases the cable size, which results in the inability to fit the cable into small diameter ducts.

Additionally, current methods for installing fiber optic cables into ducts include using compressed air to blow the cables through the ducts. This method requires an imbalance in forces between the total pushing forces (airflow and mechanical) and the total resistive forces generated as the cable slides against the interior surface of the duct. The lower the total restrictive forces relative to the total pushing forces, the further the cable can be blown. It can be easily understood that additional strength members added to control expansion/contraction also adversely affect this blowing performance, due to the added stiffness of the strength members and the larger size and weight of the cable.

Further, thermoplastic jackets with a smooth outer surface are poor candidates for installation via compressed air. The smooth outer surface inherently has a large resistive force (due to its large contact area with the interior surface of the duct), and little contact with the pushing forces (as the smooth surface fails to interact with the moving air).

The present invention is directed to overcoming one or more of the problems as set forth above.

### Summary of the Invention

It is therefore desirable to provide a small weight percentage of simple fibers mixed within the jacket material of the fiber optic cables.

The addition of these fibers greatly improves both the shrinkage after aging and the coefficient of thermal expansion of the jacket material, without adding any secondary strength members that would necessarily increase the diameter of the cable. It is noted that the coefficient of thermal expansion can be even further reduced (to zero) by the addition of negative thermal expansion (NTE) materials and positive thermal expansion (PTE) materials.

Further, the addition of these fibers provides a rough outer surface of the jacket. This (1) reduces the contact surface between the cable and the duct in which it is being installed, and (2) increases the friction between the moving air and the cable. Further, the lack of any secondary strengthening members reduces the stiffness and weight of the cable, with further corresponding increases in blowing performance. Thus, the blowing performance of the cable is improved.

The simple addition of fibers to the jacket material offers greatly improved material features, which allows for a greater operational range for the fiber optic cable. Further, as the fibers are simple, cheap, and provided within the jacket material itself, they do not require expensive additives or further manufacturing processes.

In one aspect of the invention, a fiber optic cable comprising a transmission medium and a jacket, wherein said jacket comprises fibers at least partially embedded therein, is provided.

In a further aspect of the invention the fibers are disposed entirely within said jacket.

In a further aspect of the invention, the fibers comprise chemically coupled fibers.

In a further aspect of the invention, the fibers comprise less than approximately 20 % of the weight of said jacket.

In a further aspect of the invention the jacket has a shrinkage after aging of less than .2%.

In a further aspect of the invention, the jacket further comprises at least one of a negative thermal expansion material and a positive thermal expansion material.

In a further aspect of the invention, the negative thermal expansion materials comprise one or more of: Kevlar™ whiskers; AM207; AM208; A2M207; A2(M04)3; and materials A₂M₂O₇, A₂(MO₄)₃A₂M₂O₇, and A₂(MO₄)3, where A is a 4+ metal, and M is either 5+ or 6+ in valence.

In a further aspect of the invention, the jacket has a coefficient of thermal expansion of approximately 0.

In a further aspect of the invention, the outer surface of said jacket is rough.

In a further aspect of the invention, the roughened outer surface is wavy.

In a further aspect of the invention, the roughened outer surface has a generally parallel pattern.

In a further aspect of the invention, the fibers are approximately 7 to 20 microns in diameter.

In a further aspect of the invention, the fibers are approximately 5 to 30 microns in diameter.

In a further aspect of the invention, the fibers have an aspect ratio greater than 1.

In a further aspect of the invention, a method for producing a fiber optic cable comprising the steps of: arranging a transmission medium; preparing jacket material by mixing fibers therein; and surrounding said fiber with said jacket material to create a jacket is provided.

In a further aspect of the invention, the glass fibers comprise less than approximately 20 % of the weight of said jacket.

In a further aspect of the invention, the method further comprises mixing at least one of a negative thermal expansion material and a positive thermal expansion material in said jacket material.

In a further aspect of the invention, the negative thermal expansion materials comprise one or more of: Kevlar™ whiskers; AM207; AM208; A2M207; A2(MO₄)3; and materials A₂M₂O₇, A₂(MO₄)₃A₂M₂O₇, and A₂(MO₄)3, where A is a 4+ metal, and M is either 5+ or 6+ in valence.

In a further aspect of the invention, the method further comprises optimizing said step of applying said jacket material so as to create a roughened outer surface on said jacket.

In a further aspect of the invention, the step of optimizing .the application of said jacket material comprises setting the draw down ratio in a range from approximately 2:1-5:1.

In a further aspect of the invention, the step of optimizing the application of said jacket material comprises setting the draw down ratio in a range from approximately 3:1-4:1.

### Brief Description Of The Drawings

The advantages, nature and various additional features of the invention will appear more fully upon consideration of the illustrative embodiment of the invention which is schematically set forth in the drawings, in which:
- FIG. 1: shows a basic fiber optic cable according to the invention;
- FIG. 2: is a graph of aged shrinkage versus glass content in a polyolefin jacket material.

### Detailed Description

While the invention is open to various modifications and alternative forms, specific embodiments thereof are shown by way of examples in the drawings and are described herein in detail. There is no intent to limit the invention to the particular forms disclosed.

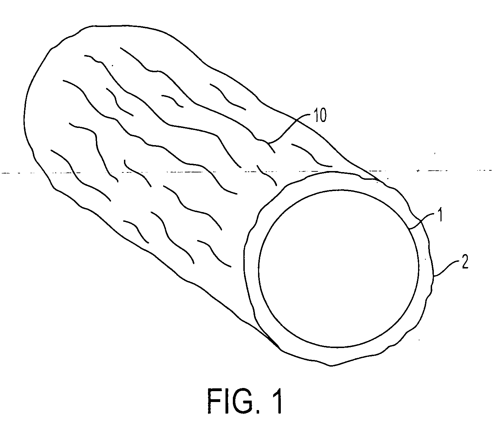

FIG. 1 shows a simplified exemplary fiber optic cable. Optical fiber 1 is surrounded by jacket 2. Of course, if should be understood that a bundle of optical fibers surrounded by a filling compound could be substituted for optical fiber 1. Jacket 2 is composed of a plastic material, wherein fibers are mixed. In one embodiment, the fibers are disposed entirely within said jacket 2, and the total amount of fibers amounts to less than approximately 20 % of the weight of jacket 2. In alternative embodiments, the fibers may be only partially disposed within the jacket 2, and may have a total amount of fibers greater than 20% of the weight of jacket 2.

These fibers can be any readily available chemically coupled fiber, such as e-glass, graphite, Kevlar™ wiskers, or any other glass and polymeric fiber types that are appropriate. The chemical coupling agent acts to bond the fibers to the polymer and transfer stress to the fibers so they can reinforce the composite, and helps to control shrinkage and improve the modulus of the system. The coupling agent also prevents the fibers from easily debonding with the polymer, thereby helping support thermal and mechanical loads on the cable. In an alternative embodiment the fibers may be included in the polymer without a coupling agent.

The fibers may have various dimensions in order to optimize the cable's characteristics. Diameters of commercial fibers currently available are approximately 7 to 20 microns, but alternative embodiments using fibers with diameters between 5 and 30 microns are possible. The length of the fibers may also be optimally adjusted, but should have an aspect ratio, i.e., the ratio between the length and diameter of the fiber, greater than 1.

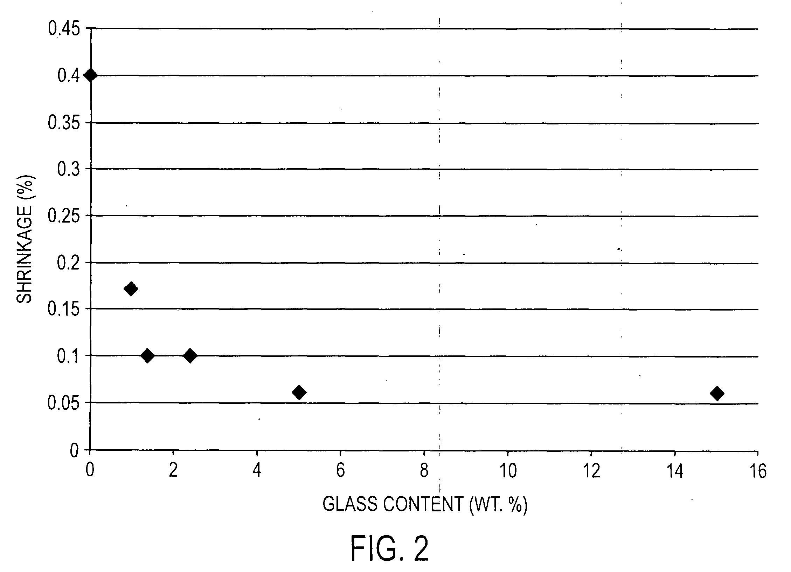

FIG. 2 illustrates the effect of glass content on shrinkage after aging the jacket at 95°C for four hours. For comparison with a conventional fiber optic cable, the first data point shows a jacket without glass fiber (glass fiber content of 0 %) and its corresponding shrinkage value of .4 %. In contrast, the addition of glass fiber drastically reduces the shrinkage after aging. For example, a glass content of approximately 2 % or greater effectively reduces the aged jacket shrinkage to .1% or less.

Coefficient of thermal expansion (CTE) is also unexpectedly greatly improved by the addition of these fibers. CTE can be further improved (and actually brought to zero) by incorporation of CTE modifying additives (negative thermal expansion (NTE) materials and positive thermal expansion (PTE) materials) beyond the more simple fibers discussed above.
This is possible since the overall thermal response is incorporated into the cable sheath structure and is not a stand-alone element built into the jacket such as a FRP or GRP. NTE materials that may be used in the invention include, for example: Kevlar™ whiskers, AM207, AM208, A2M207, A₂(MO₄)₃ materials A₂M₂O₇ and A₂(MO₄)₃A₂M₂O₇ and A₂(MO₄)3 where A is a 4+ metal, and M is either 5+ or 6+ in valence.

FIG. 1 also shows jacket 2 with a roughened surface formed by the addition of fibers to jacket 2 according to one embodiment of the invention. Waves 10 are shown, and are disposed in a generally longitudinal, and approximately parallel pattern with peaks as close as 1 to 1.5 mm apart, although the spacing may be more random depending upon the processing parameters. Alternative embodiments of the invention include disposing the fibers in a generally non-longitudinal direction with parallel or non-parallel orientations, and even a random orientation. The roughened surface structures discussed above provide at least two advantages. The non-smooth profile reduces the contact surface between the cable and the duct in which it is being installed. The reduction of contact area decreases the friction between the cable and the duct. The second advantage of a rough profile cable is the aerodynamic benefits that it provides. In blown installations, the friction between the air and the cable should be maximized. The greater the friction between the moving air and the cable, the greater the speeds at which the cable can be installed, which in turn means greater distances. The rough cable profile generates this friction between the cable and the air.

As an example, a trial was conducted to compare the air pressure requirements to install a cable with: (1) a glass filled polypropylene jacket; and (2) a homogeneous polypropylene jacket over an installation length of 1200m.
The cable with a glass filled polypropylene jacket only required 7.5 bar of air pressure to be applied. In contrast, the cable with a homogeneous polypropylene jacket required 10.5 bar of air pressure. Thus, the blowing performance was improved by approximately 30%.

This texture was also determined to be affected by the Draw Down Ratio (DDR). This is the ratio describing the relationship between the cable OD / ID to the extrusion tooling Tip OD to Die ID, and helps to define how the polymer jacket is stretched into its final shape. An optimized DDR in range from 2:1-5:1, or more preferably, 3:1-4:1, was selected to obtain the correct surface texture. A low DDR allows the material to be extruded to its near final shape, with very little stretching of the polymer matrix, while a higher DDR increases the amount of stretching the polymer encounters before its final shape. While increasing the DDR increases the surface roughness of the material, it also makes processing difficult, due to the jacket's tendency to break due to the glass filling. The correct balance of the DDR enables the provision of just enough surface texture for blowing purposes while limiting jacket stretching and tendency to break during processing.

It is of course understood that departures can be made from the preferred embodiment of the invention by those of ordinary skill in the art without departing from the spirit and scope of the invention that is limited only by the following claims.

## Claims

1. A fiber optic cable comprising a transmission medium and a jacket, wherein said jacket comprises fibers at least partially embedded therein.

2. A fiber optic cable as recited in claim 1, wherein said fibers are disposed entirely within said jacket.

3. A fiber optic cable as recited in claim 1, wherein said fibers comprise chemically coupled fibers.

4. A fiber optic cable as recited in claim 1, wherein said fibers comprise less than approximately 20 % ofthe weight of said jacket.

5. A fiber optic cable as recited in claim 1, wherein said jacket has a shrinkage after aging of less than .2%.

6. A fiber optic cable as recited in claim 1, wherein said jacket further comprises at least one of a negative thermal expansion material and a positive thermal expansion material.

7. A fiber optic cable as recited in claim 6, wherein said negative thermal expansion materials comprise one or more of: Kevlar™ whiskers; AM207; AM208; A2M207; A2(M04)3; and materials A₂M₂O₇, A₂(MO₄)₃A₂M₂O₇, and A₂(MO₄)3, where A is a 4+ metal, and M is either 5+ or 6+ in valence.

8. A fiber optic cable as recited in claim 6, wherein said jacket has a coefficient of thermal expansion of approximately 0.

9. A fiber optic cable as recited in claim 1, wherein an outer surface of said jacket is rough.

10. A fiber optic cable as recited in claim 9, wherein said roughened outer surface is wavy.

11. A fiber optic cable as recited in claim 9, wherein said roughened outer surface has a generally parallel pattern.

12. A fiber optic cable as recited in claim 1, wherein said fibers are approximately 7 to 20 microns in diameter.

13. A fiber optic cable as recited in claim 1, wherein said fibers are approximately 5 to 30 microns in diameter.

14. A fiber optic cable as recited in claim 1, wherein said fibers have an aspect ratio greater than 1.

15. A method for producing a fiber optic cable comprising the steps of:
arranging a transmission medium;
preparing jacket material by mixing fibers therein;
and surrounding said fiber with said jacket material to create a jacket.

16. A method for producing a fiber optic cable as recited in claim 15, wherein said glass fibers comprise less than approximately 20 % of the weight of said jacket.

17. A method for producing a fiber optic cable as recited in claim 15, wherein said method further comprises mixing at least one of a negative thermal expansion material and a positive thermal expansion material in said jacket material.

18. A method for producing a fiber optic cable as recited in claim 17, wherein said negative thermal expansion materials comprise one or more of: Kevlar™ whiskers; AM207; AM208; A2M207; A2(M04)3; and materials A₂M₂O₇, A₂(MO₄)₃A₂M₂O₇, and A₂(MO₄)3, where A is a 4+ metal, and M is either 5+ or 6+ in valence.

19. A method for producing a fiber optic cable as recited in claim 15, wherein said method further comprises optimizing said step of applying said jacket material so as to create a roughened outer surface on said jacket.

20. A method for producing a fiber optic cable as recited in claim 19, wherein said step of optimizing the application of said jacket material comprises setting the draw down ratio in a range from approximately 2:1-5:1.

21. A method for producing a fiber optic cable as recited in claim 19, wherein said step of optimizing the application of said jacket material comprises setting the draw down ratio in a range from approximately 3:1-4:1.
